# EUROPÄISCHE PATENTSCHRIFT

(11) **EP 3 774 164 B1**
(45) Veröffentlichungstag und Bekanntmachung des Hinweises auf die Patenterteilung: **06.07.2022**
(21) Anmeldenummer: 19714160.9
(22) Anmeldetag: 25.03.2019
(51) Int. Cl.: B23K 26/38, B23K 26/08

(54) **LASERSCHNEIDVERFAHREN MIT EINER ERHÖHUNG DES SCHNEIDDÜSENABSTANDS AM SCHNITTENDE SOWIE LASERSCHNEIDMASCHINE UND COMPUTERPROGRAMMPRODUKT**
LASER CUTTING METHOD WITH AN INCREASED CUTTING NOZZLE DISTANCE AT THE END OF THE CUT, LASER CUTTING MACHINE AND COMPUTER PROGRAM PRODUCT
PROCÉDÉ DE COUPE AU LASER AVEC AUGMENTATION DE LA DISTANCE DE BUSE DE COUPE À L'EXTRÉMITÉ DE COUPE ET UNE MACHINE DE COUPE AU LASER ET PRODUIT PROGRAMME INFORMATIQUE

(30) Priorität: 27.03.2018 DE 102018204663
(43) Veröffentlichungstag der Anmeldung: 17.02.2021
(73) Patentinhaber: TRUMPF Werkzeugmaschinen GmbH + Co. KG, 71254 Ditzingen (DE)
(72) Erfinder: HERT, Thomas, 71254 Ditzingen (DE); SCHÖNHARDT, Guido, 71254 Ditzingen (DE)
(74) Vertreter: Kohler Schmid Möbus Patentanwälte
(86) Internationale Anmeldenummer: PCT/EP2019/057407
(87) Internationale Veröffentlichungsnummer: WO 2019/185528

(56) Entgegenhaltungen:
- DE-A1-102015 105 246
- DE-U1-202010 017 944
- US-A1- 2014 005 822

## Beschreibung

Die Erfindung betrifft ein Verfahren zum Laserschneiden einer in sich geschlossenen Schnittkontur in ein vorzugsweise plattenförmiges Werkstück mittels eines Laserstrahls und eines aus einer Schneiddüse austretenden Schneidgases, sowie eine zum Durchführen des Laserschneidverfahrens geeignete Laserschneidmaschine und ein zugehöriges Computerprogrammprodukt.

Ein derartiges Laserschneidverfahren ist beispielsweise durch die DE 10 2015 221 243 A1 , oder die dem Oberbegriff der Ansprüche 1 und 13 zugrundeliegende US2014/005822, bekannt geworden.

Das Laserschneiden von plattenförmigen, insbesondere metallischen Werkstücken erfolgt beispielsweise in sogenannten Flying-optics-Laserschneidmaschinen, in denen ein Laserschneidkopf zweidimensional über das auf gitterförmig angeordneten Auflagestegen aufliegende Werkstück bewegt wird. Alternativ kann das Werkstück auf mit Bürsten versehenen Werkstückauflageflächen gelagert und von einer Bewegungseinheit in einer oder zwei Raumrichtungen bewegt werden, während der Laserschneidkopf ortsfest über einer rohrförmigen Absaugeinrichtung angeordnet ist oder entlang eines Schneidspalts ebenfalls in einer Raumrichtung bewegt werden kann.

Beim Schneiden von Werkstücken in solchen Anlagen kann es beim Freischneiden eines Werkstückteils, d.h. beim vollständigen Trennen des Werkstückteils vom umgebenden Restwerkstück, zu einem Kippen des Werkstückteils relativ zum Restwerkstück kommen. Dies kann zu einer Kollision des Laserschneidkopfs mit dem verkippten Werkstückteil und zu Problemen beim Entladen der Laserschneidmaschine durch automatisierte Entladevorrichtungen führen.

Eine Ursache für das Kippen des Werkstückteils ist das beim Laserschneiden eingesetzte Schneidgas, das dazu dient, die Schmelze nach unten aus dem im Werkstück gebildeten Schnittspalt auszutreiben. Im Moment des Freischnitts wirkt der Gasdruck des Schneidgases am Freischnittpunkt, d.h. einseitig, auf das Werkstückteil ein. Abhängig davon, wie das Werkstückteil durch die Spitzen der Auflagestege oder durch die am Schneidspalt angrenzenden Werkstückauflageflächen gestützt wird, kann der einwirkende Schneidgasdruck zu einem Kippen des Werkstückteils führen.

Im ungünstigen Fall wird der im Werkstück ausgebildete Schnittspalt durch das Verkippen des Werkstückteils verschlossen, so dass das aufgeschmolzene Werkstückmaterial (die Schlacke) nicht mehr nach unten austreten kann und stattdessen nach oben geschleudert wird. Dies führt zu einem Verschmutzen der Schneiddüse und ggf. von oberhalb der Düse im Laserschneidkopf angeordneten optischen Komponenten, z.B. eines Schutzglases.

Insbesondere beim Einsatz einer Schneiddüse mit beweglicher Düsenhülse, die zum besseren Einkoppeln des Schneidgases in den Schnittspalt eingesetzt wird, kommt es zu verstärkten Verschmutzungen, da die Düsenhülse die Werkstückoberfläche kontaktiert und somit die Schlacke nur nach oben in Richtung des Schneidkopfinnenraums spritzen kann.

Eine bisher übliche Lösung für dieses Problem sieht vor, die fast vollständig freigeschnittenen Werkstückteile durch schmale Verbindungsstege, sog. Microjoints, im umgebenden Restwerkstück zu fixieren. Nach dem Entladen der Maschine können die Werkstückteile beispielsweise manuell oder durch vibrierende Trennvorrichtungen aus dem Restwerkstück getrennt werden, allerdings bleiben oft Ansatzmarken an der Stelle der Microjoints.

Aus dem Stand der Technik ist es außerdem bekannt, die Laserleistung oder die Schneidgeschwindigkeit am Schnittkonturende eines Werkstückteils zu reduzieren oder die Art des Schneidgases zu ändern, beispielsweise aus DE 195 06 522 B4, US 9,434,024 B2, WO 2012/063668 A1 oder JPH 03210981 A.

Aus JPH 02179375 A ist es bekannt, die automatische Abstandsregelung zwischen Laserschneidkopf und Werkstückoberfläche am Schnittkonturende eines Werkstückteils abzuschalten und den Abstand stattdessen auf einen festgelegten Wert einzustellen, um unerwünschte Schwankungen des Abstands zu vermeiden.

Außerdem wurde vorgeschlagen, den Abstand der Düse zum Werkstück direkt nach Beendigung des Schnitts, d.h. nach dem Freischnitt des Werkstückteils, gesteuert zu erhöhen, beispielsweise in US 6,870,130 B2 oder WO 2016/020411 A1.

Bei dem aus der eingangs genannten DE 10 2015 221 243 A1 bekannten Laserschneidverfahren wird der Abstand des Laserschneidkopfes zum Werkstück gemessen. Zur Detektion des Endes der Schnittkontur wird auf einem Endabschnitt der Schnittkontur der zeitliche Gradient der Abstandsmesswerte bestimmt und mit einem Gradienten-Schwellwert verglichen. Bei Überschreiten des Gradienten-Schwellwertes wird das Ende der Schnittkontur detektiert und der Laserstrahl ausgeschaltet.

Demgegenüber stellt sich der vorliegenden Erfindung die Aufgabe, die Prozesssicherheit beim Laserschneiden, insbesondere beim Einsatz einer Düse mit beweglicher Düsenhülse, zu erhöhen.

Diese Aufgabe wird bei dem Verfahren dadurch gelöst, dass auf oder entlang einer vorgegebenen Endstrecke vor dem Freischnittpunkt eines durch die Schnittkontur freigeschnittenen Werkstückteils der Abstand der Schneiddüse zur Werkstückoberfläche erhöht wird. Die Länge der Endstrecke beträgt bevorzugt höchstens 2 mm, besonders bevorzugt zwischen 0,5 und 2 mm.

Erfindungsgemäß wird bereits vor dem Freischnittpunkt auf oder entlang der vorgegebenen Endstrecke ein Spalt zwischen der Schneiddüse oder einer beweglichen Düsenhülse und der Werkstückoberfläche gebildet und/oder vergrößert, so dass das Schneidgas, Funken, Rauch und evtl. Schlacke seitlich entweichen können und eine Verschmutzung der Schneiddüse oder von optischen Komponenten im Laserschneidkopf vermieden oder zumindest verringert wird. Ist die Schneiddüse an einem Laserschneidkopf befestigt, kann die Abstandsänderung durch eine Bewegung der Schneiddüse relativ zum Laserschneidkopf oder durch eine Bewegung des gesamten Laserschneidkopfs erfolgen.

In einer bevorzugten Verfahrensvariante erfolgt die Erhöhung des Abstands der Schneiddüse zur Werkstückoberfläche zu Beginn der Endstrecke sprunghaft, indem die Verfahrbewegung der Schneiddüse oder des Werkstücks entlang der Schnittkontur solange angehalten wird, bis die Abstandsänderung abgeschlossen ist. In einer anderen bevorzugten Verfahrensvariante erfolgt die Erhöhung des Abstands der Schneiddüse zur Werkstückoberfläche entlang einer unmittelbar vor der Endstecke liegenden, vorgegebenen Vorlaufstrecke, insbesondere kontinuierlich wie z.B. in linearer Weise. In einer weiteren bevorzugten Verfahrensvariante erfolgt die Erhöhung des Abstands der Schneiddüse zur Werkstückoberfläche entlang der Endstecke kontinuierlich wie z.B. in linearer Weise. In den beiden letztgenannten Fällen kann die Abstandserhöhung gleichzeitig während der Verfahrbewegung der Schneiddüse oder des Werkstücks entlang der Schnittkontur erfolgen, also ohne die Schneiddüse oder das Werkstück anzuhalten.

Vorzugsweise beträgt im Moment des Freischnitts des Werkstückteils, d.h. am Freischnittpunkt, der Abstand zwischen einer werkstückseitigen Stirnfläche der Schneiddüse oder der werkstückseitigen Stirnfläche einer verschiebbar gelagerten Düsenhülse der Schneiddüse und der Werkstückoberfläche mindestens 0,3 mm, bevorzugt mindestens 1 mm, um eine ausreichende Verringerung des auf das Werkstück wirkenden Gasdrucks zu erreichen und dadurch das Verkippen des freigeschnittenen Werkstückteils zu verhindern.

Während der Abstandserhöhung wird bevorzugt die Fokuslage des Laserstrahls relativ zum Werkstück konstant gehalten. Dazu wird beispielsweise während der Abstandserhöhung gleichzeitig eine im Laserschneidkopf angeordnete Fokussieroptik in Richtung der Werkstückoberfläche bewegt, um den Fokuspunkt des Laserstrahls nach unten zu verschieben und so die Vertikalbewegung des Laserschneidkopfs nach oben zu kompensieren.

Vorzugsweise ist der Schneidgasdruck entlang der Schnittkontur konstant und beträgt 5 bis 6 bar. Bei diesem Wert erfolgt vor allem beim Einsatz einer Düse mit Düsenhülse ein guter Austrieb der Schlacke nach unten aus dem Schneidspalt, ohne dass es zu Spritzern in Richtung der optischen Komponenten im Laserschneidkopf kommt.

In einem weiteren Aspekt betrifft die Erfindung auch eine Laserschneidmaschine gemäß Anspruch 13.

Die Erfindung betrifft schließlich auch ein Computerprogrammprodukt, welches Codemittel aufweist, die zum Durchführen aller Schritte des erfindungsgemäßen Verfahrens angepasst sind, wenn das Programm auf einer Maschinensteuerung einer Laserschneidmaschine abläuft.

Weitere Vorteile und vorteilhafte Ausgestaltungen des Gegenstands der Erfindung ergeben sich aus der Beschreibung, den Ansprüchen und der Zeichnung. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fig. 1: schematisch eine erfindungsgemäße Laserschneidmaschine;
- Fign. 2a-2f: Varianten des erfindungsgemäßen Laserschneidverfahrens mit einer Erhöhung des Schneiddüsenabstands am Schnittende; und
- Fign. 3a, 3b: schematisch eine Schneidgasdüse (Fig. 3a) und eine Schneidgasdüse mit einer verschiebbar gelagerten Düsenhülse (Fig. 3b).

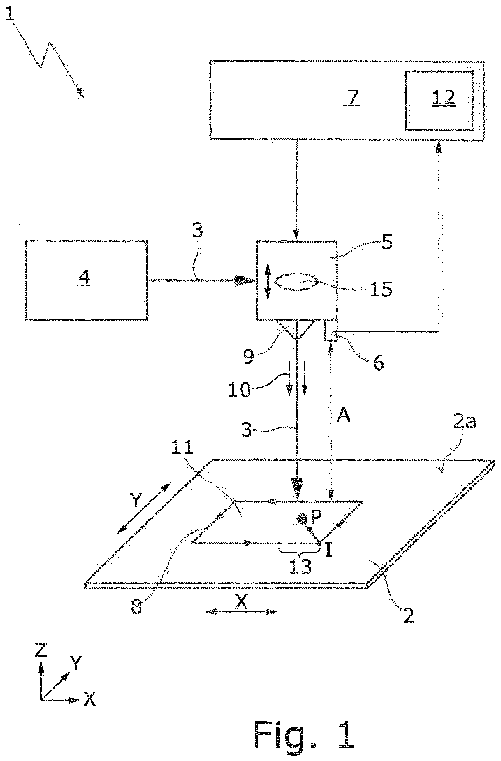

Die in **Fig. 1** gezeigte Laserschneidmaschine 1 dient zum Laserschneiden von plattenförmigen Werkstücken **2,** insbesondere aus Metall, mittels eines Laserstrahls **3.**

Die Laserschneidmaschine 1 umfasst einen Laserstrahlerzeuger **4** zum Erzeugen des Laserstrahls 3, einen relativ zum Werkstück 2 in der X-Y-Ebene bewegbaren Laserschneidkopf **5,** der den Laserstrahl 3 auf ein Werkstück 2 richtet, einen beispielsweise kapazitiven Abstandssensor **6,** der den Abstand **A des** Laserschneidkopfes 5 zur Werkstückoberfläche **2a** misst, und eine Maschinensteuerung **7,** die beim Laserschneiden einer in sich geschlossenen Schnittkontur **8** in das Werkstück 2 die x-y-Relativbewegung des Laserschneidkopfes 5 steuert.

Im gezeigten Ausführungsbeispiel misst der Abstandssensor 6 den Abstand A einer Schneiddüse **9** des Laserschneidkopfes 5, aus der der Laserstrahl 3 zusammen mit einem Schneidgas **10** austritt, zur Werkstückoberfläche 2a. Das mittels der Schnittkontur 8 ausgeschnittene Werkstückteil ist mit **11** bezeichnet. Beim Schneiden der Schnittkontur 8 wird der Abstand A der Schneiddüse 9 zur Werkstückoberfläche 2a mit dem Abstandssensor 6 gemessen und über diesen Abstandsmesswert mittels einer Abstandsregelung **12,** die Teil der Maschinensteuerung 7 sein kann, konstant gehalten. Eine Abstandsänderung der Schneiddüse 9 kann durch eine Bewegung der Schneiddüse 9 relativ zum Laserschneidkopf 5 oder durch eine Bewegung des gesamten Laserschneidkopfs 5 erfolgen. Statt einer Bewegung des Laserschneidkopfs 5 oder ergänzend dazu kann eine Bewegung des Werkstücks 2 erfolgen, um die Schnittkontur 8 zu erzeugen.

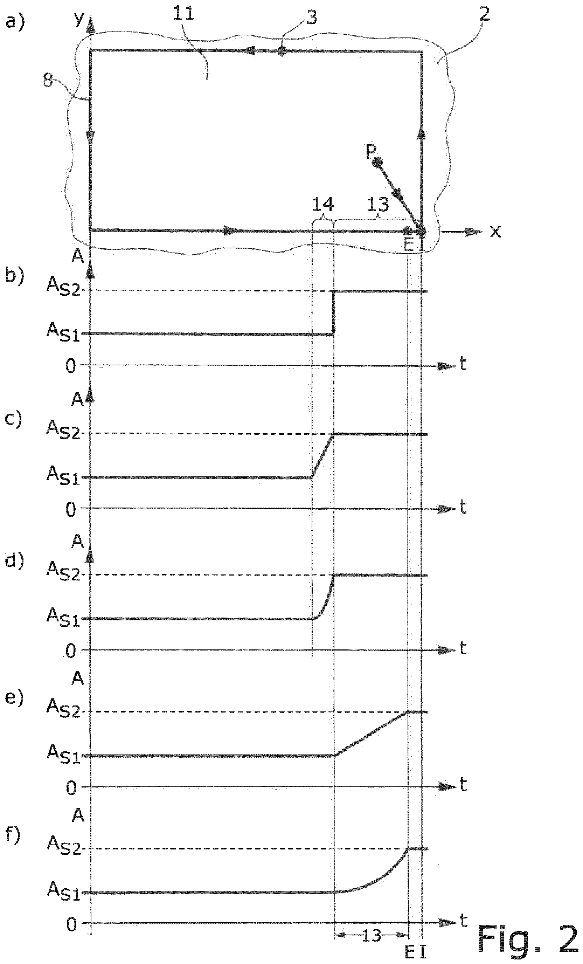

**Fig. 2a** zeigt die Bewegung des Laserstrahls 3 auf dem Werkstück 2 in X- und Y-Richtung, um das Werkstückteil 11 auszuschneiden. Der Laserstrahl 3 sticht im Einstechpunkt **P** in das Werkstück 2 ein und wird dann zur Schnittkontur 8 bewegt. Der Laserstrahl 3 beginnt im Anfangspunkt I der Schnittkontur 8 und fährt die in sich geschlossene Schnittkontur 8, wie durch Pfeile angedeutet, entgegen dem Uhrzeigersinn ab. Abhängig von Konturgeometrie, Breite des gebildeten Schnittspalts und Fokusdurchmesser des Laserstrahls 3 ist das Werkstückteil 11 bereits kurz vor Erreichen des Anfangspunkts I der Schnittkontur 8 freigeschnitten, nämlich im Freischnittpunkt **E.** Vorzugsweise wird der Schneidgasdruck entlang der gesamten Schnittkontur 8 nicht verändert und beträgt 5 bis 6 bar.

Wie in **Fign. 2b-2d** gezeigt, regelt die Abstandsregelung 12 den Abstand der Schneiddüse 9 zur Werkstückoberfläche 2a entlang fast der gesamten Schnittkontur 8 auf einen konstanten Sollwert **A_{S1}.** Erst auf oder entlang einer vorgegebenen Endstrecke **13** kurz vor dem Freischnitt E wird der Abstand der Schneiddüse 9 zur Werkstückoberfläche 2a dann auf einen höheren Sollwert **A_{S2}** (A_{S2} > A_{S1}) entweder gesteuert oder geregelt eingestellt. Die Länge der Endstrecke 13 beträgt höchstens 2 mm, bevorzugt zwischen 0,5 und 2 mm.

In Fig. 2b erfolgt die Erhöhung von dem geringeren Abstand A_{S1} auf den höheren Abstand A_{S2} sprunghaft zu Beginn der Endstrecke 13. In Fign. 2c, 2d erfolgt die Erhöhung von dem geringeren Abstand A_{S1} auf den höheren Abstand A_{S2} entlang einer unmittelbar vor der Endstecke 13 liegenden, vorgegebenen Vorlaufstrecke **14,** und zwar beispielsweise über einen linearen Anstieg (Fig. 2c) oder einen exponentiellen Anstieg (Fig. 2d). Die Vorlaufstrecke 14 ist bevorzugt kürzer als die Endstrecke 13.

In **Fign. 2e, 2f** erfolgt die Erhöhung von dem geringeren Abstand A_{S1} auf den höheren Abstand A_{S2} entlang der Endstecke 13, und zwar beispielsweise über einen linearen Anstieg (Fig. 2e) oder einen exponentiellen Anstieg (Fig. 2f). Die in Fign. 2c-2f gezeigte Abstandserhöhung erfolgt während der Verfahrbewegung der Schneiddüse 9 und/oder des Werkstücks 2 entlang der Schnittkontur 8.

Während der Abstandserhöhung wird die Fokuslage des Laserstrahls 3 relativ zum Werkstück 2 konstant gehalten, z.B. indem während der Abstandserhöhung des Laserschneidkopfes 5 eine im Laserschneidkopf 5 angeordnete Fokussieroptik **15** gegenläufig, also in Richtung der Werkstückoberfläche 2a, bewegt wird.

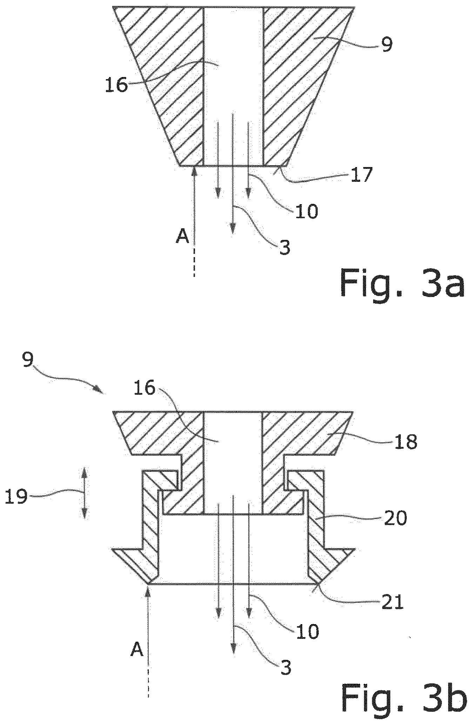

**Fig. 3a** zeigt schematisch eine Schneiddüse 9 mit einer zentralen Düsenbohrung **16,** durch die hindurch der Laserstrahl 3 und das Schneidgas 10 austreten. Im Moment des Freischnitts des Werkstückteils 11, d.h. im Freischnittpunkt E, beträgt der Abstand A zwischen der werkstückseitigen Stirnfläche **17** der Schneiddüse 9 und der Werkstückoberfläche 2a vorteilhaft mindestens 0,3 mm, bevorzugt mindestens 1 mm, um eine ausreichende Verringerung des auf das Werkstück 2 wirkenden Gasdrucks zu erreichen und dadurch das Verkippen des freigeschnittenen Werkstückteils 11 zu verringern oder zu vermeiden und um das seitliche Entweichen von Schneidgas, Funken, Rauch und evtl. Schlacke zu ermöglichen.

**Fig. 3b** zeigt schematisch eine Schneiddüse 9, die einen Düsengrundkörper **18** mit einer zentralen Düsenbohrung 16 und eine auf dem Düsengrundkörper 18 in Richtung des Doppelpfeils **19** vor- und zurück verschiebbar gelagerte Düsenhülse **20** aufweist. Die Düsenhülse 20 wird zum besseren Einkoppeln des Schneidgases 10 in den Schnittspalt eingesetzt. Im Moment des Freischnitts, d.h. am Freischnittpunkt E des Werkstückteils 11 beträgt der Abstand A zwischen der werkstückseitigen Stirnfläche **21** der Düsenhülse 20 und der Werkstückoberfläche 2a mindestens 0,3 mm, bevorzugt mindestens 1 mm, um eine ausreichende Verringerung des auf das Werkstück 2 wirkenden Gasdrucks zu erreichen und dadurch das Verkippen des freigeschnittenen Werkstückteils 11 zu verringern oder zu vermeiden und um das seitliche Entweichen von Schneidgas, Funken, Rauch und evtl. Schlacke zu ermöglichen.

## Patentansprüche

1. Verfahren zum Laserschneiden einer in sich geschlossenen Schnittkontur (8) in ein vorzugsweise plattenförmiges Werkstück (2) mittels eines Laserstrahls (3) und eines aus einer Schneiddüse (9) austretenden Schneidgases (10),
**dadurch gekennzeichnet,**
**dass** auf oder entlang einer vorgegebenen Endstrecke (13) vor dem Freischnittpunkt (E) eines durch die Schnittkontur (8) freigeschnittenen Werkstückteils (11) der Abstand (A) der Schneiddüse (9) zur Werkstückoberfläche (2a) erhöht wird.

2. Verfahren nach Anspruch 1, **dadurch gekennzeichnet, dass** die Schneiddüse (9) an einem Laserschneidkopf (5) befestigt ist und die Abstandsänderung der Schneiddüse (9) durch eine Bewegung der Schneiddüse (9) relativ zum Laserschneidkopf (5) oder durch eine Bewegung des gesamten Laserschneidkopfs (5) erfolgt.

3. Verfahren nach Anspruch 1 oder 2, **dadurch gekennzeichnet, dass** die Erhöhung des Abstands (A) der Schneiddüse (9) zur Werkstückoberfläche (2a) zu Beginn der Endstrecke (13) sprunghaft erfolgt.

4. Verfahren nach Anspruch 1 oder 2, **dadurch gekennzeichnet, dass** die Erhöhung des Abstands (A) der Schneiddüse (9) zur Werkstückoberfläche (2a) entlang einer unmittelbar vor der Endstecke (13) liegenden, vorgegebenen Vorlaufstrecke (14) erfolgt.

5. Verfahren nach Anspruch 4, **dadurch gekennzeichnet, dass** der Abstand (A) der Schneiddüse (9) zur Werkstückoberfläche (2a) entlang der Vorlaufstrecke (14) kontinuierlich, insbesondere in linearer Weise, erhöht wird.

6. Verfahren nach Anspruch 1 oder 2, **dadurch gekennzeichnet, dass** die Erhöhung des Abstands (A) der Schneiddüse (9) zur Werkstückoberfläche (2a) kontinuierlich entlang der Endstecke (13) erfolgt, insbesondere in linearer Weise.

7. Verfahren nach einem der Ansprüche 4 bis 6, **dadurch gekennzeichnet, dass** die Erhöhung des Abstands (A) der Schneiddüse (9) zur Werkstückoberfläche (2a) während der Verfahrbewegung der Schneiddüse (9) und oder des Werkstücks (2) entlang der Schnittkontur (8) erfolgt.

8. Verfahren nach einem der vorhergehenden Ansprüche, **dadurch gekennzeichnet, dass** die Länge der Endstrecke (13) höchstens 2 mm, bevorzugt zwischen 0,5 und 2 mm, beträgt.

9. Verfahren nach einem der vorhergehenden Ansprüche, **dadurch gekennzeichnet, dass** am Freischnittpunkt (E) des Werkstückteils (11) der Abstand (A) zwischen einer werkstückseitigen Stirnfläche (17) der Schneiddüse (9) oder der werkstückseitigen Stirnfläche (21) einer verschiebbar gelagerten Düsenhülse (20) der Schneiddüse (9) und der Werkstückoberfläche (2a) mindestens 0,3 mm, bevorzugt mindestens 1 mm, beträgt.

10. Verfahren nach einem der vorhergehenden Ansprüche, **dadurch gekennzeichnet, dass** während der Abstandserhöhung die Fokuslage des Laserstrahls (3) relativ zum Werkstück (2) konstant gehalten wird.

11. Verfahren nach Anspruch 9, **dadurch gekennzeichnet, dass** während der Abstandserhöhung eine im Laserschneidkopf (5) angeordnete Fokussieroptik (15) in Richtung der Werkstückoberfläche (2a) bewegt wird.

12. Verfahren nach einem der vorhergehenden Ansprüche, **dadurch gekennzeichnet, dass** der Schneidgasdruck entlang der Schnittkontur (8) konstant ist und insbesondere 5 bis 6 bar beträgt.

13. Laserschneidmaschine (1) zum Laserschneiden von vorzugsweise plattenförmigen Werkstücken (2) mittels eines Laserstrahls (3),
mit einem Laserstrahlerzeuger (4) zum Erzeugen des Laserstrahls (3),
mit einem in einer X-Y-Ebene bewegbaren Laserschneidkopf (5), der den Laserstrahl (3) auf ein Werkstück (2) richtet,
mit einem Abstandssensor (6), der den Abstand (A) des Laserschneidkopfes (3) zur Werkstückoberfläche (2a) misst, und **gekennzeichnet durch** eine Maschinensteuerung (7), die die X-Y Relativbewegung des Laserschneidkopfes steuert, und die programmiert ist, das Verfahren nach einem der vorhergehenden Ansprüche durchzuführen.

14. Computerprogrammprodukt, welches Codemittel aufweist, die zum Durchführen aller Schritte des Verfahrens nach einem der Ansprüche 1 bis 11 angepasst sind, wenn das Programm auf einer Maschinensteuerung (7) einer Laserschneidmaschine (1) abläuft.

## Claims

1. Method of laser cutting of a self-contained cutting contour (8) into a preferably plate-shaped workpiece (2) by means of a laser beam (3) and a cutting gas (10) exiting from a cutting nozzle (9),
**characterized in that**
the distance (A) between the cutting nozzle (9) and the workpiece surface (2a) is increased on or along a predetermined final path (13) before the free cutting point (E) of a workpiece part (11) that has been cut free by the cutting contour (8).

2. Method according to claim 1, **characterized in that** the cutting nozzle (9) is mounted to a laser cutting head (5) and the distance change of the cutting nozzle (9) is realized by movement of the cutting nozzle (9) relative to the laser cutting head (5) or by movement of the overall laser cutting head (5).

3. Method according to claim 1 or 2, **characterized in that** the distance (A) between the cutting nozzle (9) and the workpiece surface (2a) is increased abruptly at the beginning of the final path (13).

4. Method according to claim 1 or 2, **characterized in that** the distance (A) between the cutting nozzle (9) and the workpiece surface (2a) is increased along a predetermined lead distance (14) located directly before the final path (13).

5. Method according to claim 4, **characterized in that** the distance (A) between the cutting nozzle (9) and the workpiece surface (2a) along the lead distance (14) is increased continuously, in particular in a linear manner.

6. Method according to claim 1 or 2, **characterized in that** the distance (A) between the cutting nozzle (9) and the workpiece surface (2a) along the final path (13) is increased continuously, in particular in a linear manner.

7. Method according to any one of the claims 4 to 6, **characterized in that** the distance (A) between the cutting nozzle (9) and the workpiece surface (2a) is increased during the traversing movement of the cutting nozzle (9) and or of the workpiece (2) along the cutting contour (8).

8. Method according to any one of the preceding claims, **characterized in that** the length of the final path (13) is maximally 2mm, preferably between 0.5 and 2mm.

9. Method according to any one of the preceding claims, **characterized in that** at the free cutting point (E) of the workpiece part (11), the distance (A) between an end face (17) on the workpiece side of the cutting nozzle (9) or the end face (21) on the workpiece side of a displaceably mounted nozzle sleeve (20) of the cutting nozzle (9) and the workpiece surface (2a) is at least 0.3mm, preferably at least 1mm.

10. Method according to any one of the preceding claims, **characterized in that** while the distance is being increased, the focal position of the laser beam (3) relative to the workpiece (2) is kept constant.

11. Method according to claim 9, **characterized in that** while the distance is being increased, a focussing optics (15) arranged in the laser cutting head (5) is moved towards the workpiece surface (2a).

12. Method according to any one of the preceding claims, **characterized in that** the cutting gas pressure along the cutting contour (8) is constant and is in particular 5 to 6 bar.

13. Laser cutting machine (1) for laser cutting of preferably plate-shaped workpieces (2) by means of a laser beam (3), comprising a laser beam generator (4) for generating the laser beam (3),
a laser cutting head (5) that can be moved in an X-Y-plane and directs the laser beam (3) onto a workpiece (2),
a distance sensor (6) that measures the distance (A) between the laser cutting head (3) and the workpiece surface (2a), and
**characterized by** a machine control (7) that controls the X-Y relative movement of the laser cutting head and is programmed to perform the method according to any of the preceding claims.

14. Computer program product comprising code means that are adjusted to perform all the steps of the method according to any one of the claims 1 to 11, when the program runs on a machine control (7) of a laser cutting machine (1).

## Revendications

1. Procédé de découpe au laser d'un contour de découpe fermé (8) dans une pièce (2) de préférence en forme de plaque au moyen d'un faisceau laser (3) et d'un gaz de découpe (10) sortant d'une buse de découpe (9),
**caractérisé en ce que**
la distance (A) de la buse de découpe (9) à la surface (2a) de la pièce est augmentée sur ou le long d'une section d'extrémité spécifiée (13) avant le point de découpe (E) d'une pièce (11) découpée par le biais du contour de découpe (8).

2. Procédé selon la revendication 1, **caractérisé en ce que** la buse de coupe (9) est fixée à une tête de découpe au laser (5) et la variation de distance de la buse de découpe (9) est effectuée par un déplacement de la buse de découpe (9) par rapport à la tête de découpe au laser (5) ou par un déplacement de l'ensemble de la tête de découpe laser (5).

3. Procédé selon la revendication 1 ou 2, **caractérisé en ce que** l'augmentation de la distance (A) de la buse de découpe (9) à la surface (2a) de la pièce au début de la section d'extrémité (13) est effectuée soudainement.

4. Procédé selon la revendication 1 ou 2, **caractérisé en ce que** l'augmentation de la distance (A) de la buse de découpe (9) à la surface (2a) de la pièce est effectuée le long d'une section d'avance spécifiée (14) située directement avant la section d'extrémité (13).

5. Procédé selon la revendication 4, **caractérisé en ce que** la distance (A) de la buse de découpe (9) à la surface (2a) de la pièce le long de la section d'avance (14) est augmentée de manière continue, notamment de manière linéaire.

6. Procédé selon la revendication 1 ou 2, **caractérisé en ce que** l'augmentation de la distance (A) de la buse de découpe (9) à la surface de la pièce (2a) est effectuée de manière continue le long de la section d'extrémité (13), notamment de manière linéaire.

7. Procédé selon l'une des revendications 4 à 6, **caractérisé en ce que** l'augmentation de la distance (A) de la buse de découpe (9) à la surface (2a) de la pièce est effectuée lors du déplacement de la buse de découpe (9) et/ou de la pièce (2) le long du contour de découpe (8) .

8. Procédé selon l'une des revendications précédentes, **caractérisé en ce que** la longueur de la section d'extrémité (13) est de 2 mm maximum, de préférence comprise entre 0,5 et 2 mm.

9. Procédé selon l'une des revendications précédentes, **caractérisé en ce que**, au point de découpe (E) de la pièce (11), la distance (A) entre une surface frontale côté pièce (17) de la pièce de découpe (9) ou la surface frontale côté pièce (21) d'une douille de buse (20), montée de manière coulissante, de la buse de découpe (9) et la surface (2a) de la pièce est d'au moins 0,3 mm, de préférence d'au moins 1 mm.

10. Procédé selon l'une des revendications précédentes, **caractérisé en ce que** la position focale du faisceau laser (3) par rapport à la pièce (2) est maintenue constante pendant l'augmentation de distance.

11. Procédé selon la revendication 9, **caractérisé en ce que**, pendant l'augmentation de distance, une optique de focalisation (15) disposée de la tête de découpe au laser (5) est déplacée en direction de la surface (2a) de la pièce.

12. Procédé selon l'une des revendications précédentes, **caractérisé en ce que** la pression du gaz de découpe est constante le long du contour de découpe (8) et est notamment de 5 à 6 bars.

13. Machine de découpe au laser (1) destinée à la découpe au laser de pièces (2) de préférence en forme de plaque au moyen d'un faisceau laser (3), ladite machine comprenant
un générateur de faisceau laser (4) destiné à générer le faisceau laser (3),
une tête de découpe au laser (5) qui est mobile dans un plan X-Y et qui dirige le faisceau laser (3) sur une pièce (2),
un capteur de distance (6) qui mesure la distance (A) de la tête de découpe au laser (3) à la surface (2a) de la pièce, et
**caractérisée par** une commande de machine (7) qui commande le mouvement relatif X-Y de la tête de découpe au laser et qui est programmée pour mettre en œuvre le procédé selon l'une des revendications précédentes.

14. Progiciel qui comporte des moyens de codage qui sont adaptés pour réaliser toutes les étapes du procédé selon l'une des revendications 1 à 11 lorsque le programme est exécuté sur une commande de machine (7) d'une machine de découpe au laser (1).
